# EUROPEAN PATENT APPLICATION

(11) **EP 1 251 675 A1**
(43) Date of publication of application: **23.10.2002**
(21) Application number: 01109763.1
(22) Date of filing: 20.04.2001
(51) Int. Cl.: H04M 1/22

(54) **Mobile telephone with controlling means for switching the background light**

(71) Applicant: Sony International (Europe) GmbH, 10785 Berlin (DE)
(72) Inventor: Winkler, Gregor, c/o Sony Inter.(Europe) GmbH, 85609 Aschheim (DE)
(74) Representative: Körber, Martin, Dipl.-Phys.

(57) **Abstract**

The present invention relates to a mobile terminal (1) for a wireless communication system, comprising a background light (13) for illuminating the mobile terminal (1), a timing means (14) for providing real time information and a controlling means (16) for determining upon the occurrence of an event, if the corresponding real time information resides within a predetermined time period, and for turning on the background light (13) if the determination result is positive.

The present invention relates further to a mobile terminal (1) for a wireless communication system, comprising a background light (13) for illuminating the mobile terminal (1), and an input means (18) for manually turning on the background light (13) by a user, whereby the input means (18) is allocated to other functions in a normal operation mode.

## Description

The present invention relates to a mobile terminal for a wireless telecommunication system, like a mobile telephone or a personal digital assistant (PDA) for the Global System for Mobile Communication (GSM) or the Universal Mobile Telephone System (UMTS).

For using mobile terminals even in darkness or in a dark environment, mobile terminals comprise a background light for illuminating outputting means like a display and inputting means like keys or a keypad and the like. For displaying information on a display so called transflective LCD-displays are most commonly used, which can be read in a light environment without being illuminated by a background light.

In the prior art, the background light is turned on automatically every time an event (like an incoming call, an incoming message, operating a key, news ticker, etc.) occurs. This has the disadvantage, that even when the mobile terminal is used in a bright environment, the background light of the mobile terminal is turned on. Thus, the power consumption is higher than needed, particularly since mobile terminals are often or mostly used in a bright environment, e.g. during the daytime or in a lighted room.

The problem of useless power consumption is still increased since mobile terminals are not only used as telephones but also and increasingly as organisers. That means, that the mobile telephones are operated quite regularly, mostly at daytime.

To reduce the power consumption of a mobile terminal, the user can switch off the background light permanently. However, when the background light is needed in a dark environment, the user has to operate through some menu settings, which he cannot read in this dark environment. This may be even more difficult, since the display may display some information which would disappear when the phone is put in the menu mode.

Further, there are known mobile terminals, which turn on the background light depending on the brightness of the environment, i.e. that only in a dark environment the background light is turned on. For this purpose, these mobile terminals comprise a light sensor, like a photo diode, to determine the brightness of the environment. However, this solution requires additional hardware (light sensor), which is expensive, needs additional space and requires an additional input port (e.g. of a microprocessor or controller).

Also, such a light sensor is susceptible against effects from outside, like dirt and damage (scratching).

It is therefore the object of the present invention to provide a mobile terminal for a wireless telecommunication system, like a mobile telephone or a personal digital assistant, which provides an inexpensive and effective solution for reducing the current power consumed by the background light.

The above object is achieved by a mobile terminal for a wireless telecommunication system according to claim 1.

When an event (like an incoming call, incoming message, operating a key, outputting an alarm signal, etc.) of the mobile telephone occurs, the background light is turned on. According to the present invention the background light is, however, only turned on if an event occurs during a predetermined period of time.

Therefore, the mobile terminal for a wireless telecommunication system according to the present invention comprises a background light for illuminating the mobile terminal, a timing means for providing real time information (clock time) and a controlling means for determining upon the occurrence of the event, if the corresponding real time information resides within the predetermined time period, and for turning the background light on if the determination result is positive.

Thus, if an event occurs, the controlling means compares the actual time (real time) determined by the timing means and the predetermined time period. If the event occurs during the predetermined time period, the background light of the mobile terminal is turned on by the controlling means, else the background light stays turned off.

The above object is also achieved by a mobile terminal for a wireless telecommunication system according to claim 11.

The mobile terminal for a wireless communication system according to this embodiment of the present invention comprises a background light for illuminating the mobile terminal and input means for manually turning on the background light by a user, whereby the input means is allocated to other functions in a normal operation mode.

The advantage of the present invention is, that the background light is only turned on at a time, when the background light is needed to operate the mobile terminal, which leads to a reduction of the power consumption. Further, the present invention is easy and inexpensive to implement in mobile terminals, since there is no need for additional parts and electronic devices, like sensors and ports which are costly, susceptible for errors and space consuming.

The timing means is advantageously implemented as a timer (e.g. a real time clock) in the mobile terminal. The timing means can also provide real time information, which is received e.g. from a base station.

The mobile terminal further comprises a storing means for storing time information about the predetermined time period. This information can e.g. be a start time and an stop time, a table of time periods or an algorithm.

Advantageously, the predetermined time period indicates the night-time. Thus, the background light is turned on only at night, since the probability of a dark environment is greatest at this time period.

The night time, which is determined e.g. by the predetermined time period between sunset and sunrise, can differ in various countries. Therefore, a time zone or a country code, which determines the country where the mobile terminal is used, can be selected by a user. Advantageously, the information of the current country or time zone can also be retrieved from the network.

Further, the predetermined time period (e.g. night-time) can be made dependent on the season. Therefore, the predetermined time period is varied dependent on the season by the controlling means. Also, the predetermined time period can be made dependent on the daylight saving time and the wintertide respectively, since the predetermined time period, which e.g. determines the night time, differs between the daylight saving time and the wintertide.

In another embodiment of the present invention, the predetermined time period is manually adjustable by a user. So, the user can determine a predetermined time period, which is e.g. most suitable due to his experience in operating the mobile terminal.

Advantageously, the time-dependent switching (turning on and off) of the background light is optionally selectable by the user of the mobile terminal as a menu option.

Additionally to the time-dependent turning of the background light, the background light can be turned on manually by operating predetermined inputting means, e.g. a predetermined key (a short or a long period of time) or a predetermined combination (sequence) of keys at any time. Thus, a user is also able to turn on the background light in a dark environment during daytime, e.g. when using the mobile terminal in a dark garage or basement.

To avoid the problem that additional inputting means (key) for turning on the background light have to be provided, the background light can be turned on manually in a key-lock mode of the mobile terminal by operating an input means allocated to other functions in a normal operation mode. In the key-lock mode at least a part of the inputting means has no functionality, even if it is accessible by the user.

The key-lock mode is activated e.g. by activating a predetermined key, key-sequence or a flip cover, which covers partially or fully the keys and inputting means, respectively, of the mobile terminal.

This has the advantage, that no additional inputting means are necessary, since usually the present keys have multiple functions during operation of the mobile terminal but none during key-lock mode. The user can judge the background light condition and has the possibility to enable the background light.

The background light is advantageously turned on for a short period of time T1. Thereby, the background light stays on within a certain time T2 if the key-lock is deactivated and the automatically turned off. Further, the background light is also turned off when the key-lock is activated again.

In the following description, a preferred embodiment of the present invention is explained in more detail with reference to the enclosed drawings, in which
Fig. 1 shows a schematic top view of a mobile terminal, and
Fig. 2 shows a block diagram of a mobile terminal according to the present invention.

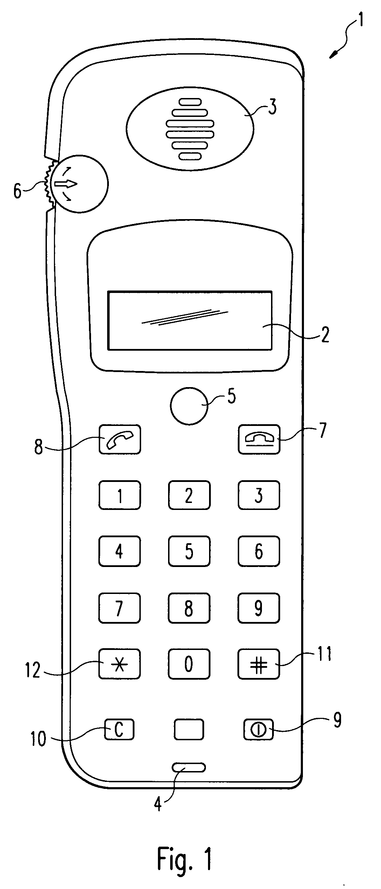

Fig. 1 shows a schematic top view of a mobile telephone 1 (mobile terminal 1) for a wireless telecommunication system as e.g. the GSM or UMTS system. Although the following description solely relates to mobile telephones, the present invention could also be realised in any portable device to be operated in a wireless communication system with limited battery capacity for powering the device.

The mobile telephone 1 shown in Fig. 1 comprises a display means 2 on which pieces of information like characters, menu items, text information or the like can be displayed. The portable telephone 1 further comprises a loudspeaker 3 on the upper front part and a microphone 4 on the lower front part of the casing. Further, an entry or menu key as enter means for selecting a respective menu item or function is provided.

The mobile telephone 1 further comprises the usual 10 alphanumeric keys (numbers 0 to 9), a communication start key 8, a communication end key 7, a pound key 11, a star key 12, a power on/off key 9 and a clear key 10. The mobile telephone comprises optionally a jog dial 6, which is a rotable key, a part of which is exposed to the outside. The exposed part can be touched by the fingers of a user and may be rotated clockwise our counter-clockwise to scroll through pieces of information displayed on the display means 2.

Further, the mobile terminal 1 comprises a background light for illuminating inputting means like keys and jog dial and the display 2 in a dark environment.

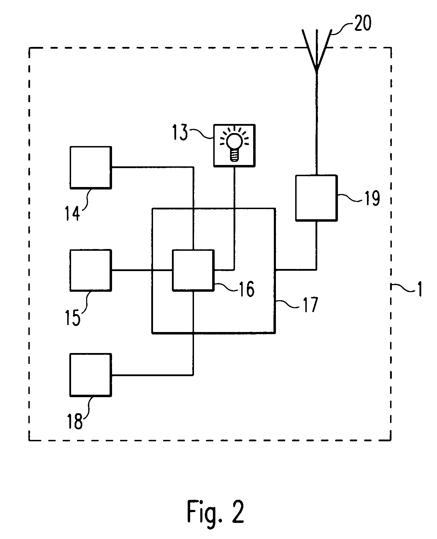

In Fig. 2 a block diagram of a mobile terminal 1 according to the present invention is shown. The mobile terminal 1 according to the present invention comprises a background light 13 for illuminating the mobile terminal 1, a timing means 14 for providing the real time, a storing means 15 for storing time information about a period of time, a controlling means 16 for controlling and switching (i.e. turning on and off) the background light and an inputting means 18 for manually turning on the background light 13 by a user. Alternatively the time information can be provided by the network and processed by the mobile terminal.

The mobile terminal 1 further comprises a processing means 17 for controlling and processing the operation of the mobile telephone 1 and an antenna 20, which is connected to a transceiving means 19 for communicating with other mobile terminals and/or base stations of the wireless telecommunication system over an air-interface.

According to the present invention, the controlling means 16 turns on the background light 13 of the mobile terminal 1, only when a predetermined event of the mobile telephone 1 occurs during a predetermined period of time; the predetermined period of time is e.g. stored as a time period in the storing means 15.

Thereby, the predetermined time period can be dependent on a plurality of factors. Generally, the background light should be turned on at night-time, e.g. the time between sunset and sunrise, since the probability of operating the mobile telephone in a dark environment is most probability at night. However, the night-time can be dependent on the country and the time-zone respectively, season, daylight saving time and wintertide respectively. This factors can be considered by making the time period e.g. dependent on an input country code of the mobile telephone and on the date, which can also be provided by the timing means 14.

The advantage of the present invention is, that the background light is only turned on at a time, when the background light is needed to operate the mobile terminal, namely at night. This leads to a reduction of power consumption and therefore to an increase of the time intervals for charging the batteries.

Further, the present invention is easy and inexpensive to implement in mobile terminals, since there is no need for additional parts and electronic devices, like sensors and ports which are costly, susceptible for errors and space consuming. Advantageously, the controlling means 16 according to the present invention is implemented as software, which is executed by the processing means 17.

Advantageously, the background light 13 is turned off by the controlling means 16 after a predetermined time (e.g. 5 seconds) of the lastly occurred event.

Additionally, the background light 13 can be turned on at any time by operating the input means 18 by the user. Thus, the user can turn on the background light 13 also during day-time in a dark environment like a dark garage or basement. This input means 18 can be e.g. a single key, a predetermined combination (sequence) of keys or a jog dial. Thus, a user is also able to turn on the background light in a dark environment during daytime in an easy way, e.g. when using the mobile terminal in a dark garage or basement.

Advantageously, the input means 18 is allocated to other functions in a normal operation mode of the mobile terminal. However, when the mobile terminal 1 is in the key-lock mode, which means that most of the keys have no functionality as long as the key-lock is active, even so they are accessible by the user, operation of the input means 18 by a user would advantageously activate the background light 13.

The background light 13 is then e.g. activated for a short period of time T1 (e.g. 3 sec). If the user deactivates the key-lock (e.g. by opening the flip cover) within a second time period T2 the background light 13 stays on or turns on as long as the key-lock is not activated again (e.g. by closing the flip cover).

An active background light 13 could e.g. mean that the background light 13 is constantly switched on or the background light 13 is switched on for a time period T3 based on certain trigger (occurred) events (e.g. key-pressing, reception of phone calls or data, etc.).

Thus, a special key for turning on the background light 13 is not required and this implementation of turning on the background light 13 is easy to understand for the user.

Advantageously, the input means 18 are designed so that it is difficult to turn on the background light 13 accidentally. So, it is avoided that the background light 13 is activated when the mobile is carried, which would lead to an increasing of current consumption.

## Claims

1. Mobile terminal (1) for a wireless communication system, comprising
a background light (13) for illuminating the mobile terminal (1),
a timing means (14) for providing real time information, and
a controlling means (16) for determining upon the occurrence of an event, if the corresponding real time information resides within a predetermined time period, and for turning on the background light (13) if the determination result is positive.

2. Mobile terminal (1) according to claim 1,
**characterized in**
**that** the timing means (14) is a timer implemented in the mobile terminal (1).

3. Mobile terminal (1) according to claim 1 or 2,
**characterized by**
a storing means (15) for storing information about the predetermined time period.

4. Mobile terminal (1) according to claim 1, 2 or 3,
**characterized in**
**that** the predetermined time period indicates a night-time.

5. Mobile terminal (1) according to one of the claims 1 to 4,
**characterized in**
**that** the predetermined time period depends on the geographic location, where the mobile terminal (1) is used.

6. Mobile terminal (1) according to one of the claims 1 to 5,
**characterized in**
**that** the predetermined time period depends on the season.

7. Mobile terminal (1) according to one of the claims 1 to 6,
**characterized in**
**that** the predetermined time period depends on the daylight saving time.

8. Mobile terminal (1) according to claim 1, 2 or 3,
**characterized in**
**that** the predetermined time period is manually adjustable by a user.

9. Mobile terminal (1) according to one of the claims 1 to 8,
**characterized in**
**that** the background light (13) can be turned on manually by operating predetermined input means (18) at any time.

10. Mobile terminal (1) according to claim 9,
**characterized in**
**that** the background light (13) can be turned on manually in a key-lock mode of the mobile terminal (1) by operating an input means allocated to other functions in a normal operation mode.

11. Mobile terminal (1) for a wireless communication system, comprising
a background light (13) for illuminating the mobile terminal (1), and
input means (18) for manually turning on the background light (13) by a user, whereby the input means (18) is allocated to other functions in a normal operation mode.

12. Mobile terminal (1) according to claim 10 or 11,
**characterized by**
comprising a flip cover, flipping of which activates and deactivates, respectively, the key-lock mode of the mobile terminal.

13. Mobile terminal (1) according to one of the claims 10 to 12,
**characterized in**
**that** the background light (13) is turned on for a short period of time T1.

14. Mobile terminal (1) according to claim 13,
**characterized in**
**that** the background light (13) stays on within a certain time T2 if the key-lock is deactivated.

15. Mobile terminal (1) according to claim 13 or 14,
**characterized in**
**that** the background light (13) is turned off the key-lock is activated again.
